# EUROPEAN PATENT APPLICATION

(11) **EP 4 096 084 A1**
(43) Date of publication of application: **30.11.2022**
(21) Application number: 21743652.6
(22) Date of filing: 20.01.2021
(51) Int. Cl.: H02M 3/28

(54) **POWER CONVERSION DEVICE AND POWER SUPPLY DEVICE FOR SUBSTATION**

(30) Priority: 20.01.2020 JP 2020006831
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: NOGI, Masayuki, Kawasaki-shi, Kanagawa 212-0013 (JP); MAKI, Koji, Kawasaki-shi, Kanagawa 212-0013 (JP); TAMADA, Shunsuke, Kawasaki-shi, Kanagawa 212-0013 (JP); KOUNO, Yuusuke, Kawasaki-shi, Kanagawa 212-0013 (JP); KATO, Yuji, Kawasaki-shi, Kanagawa 212-0013 (JP)
(74) Representative: AWA Sweden AB
(86) International application number: PCT/JP2021/001811
(87) International publication number: WO 2021/149707

(57) **Abstract**

Downsizing of a power conversion device and a power supply device is realized. A power conversion device according to an embodiment is electrically connected between a first direct current (DC) power supply (1) and a second DC power supply (2). The power conversion device includes a chopper circuit (5) with a step-down output terminal electrically connected, via a reactor (8), between a positive terminal and a negative terminal of the second DC power supply (2). The power conversion device also includes a high frequency insulation circuit (15) including a first inverter (INV1) with a first DC main circuit electrically connected between a positive terminal and a negative terminal of the first DC power supply (1), a second inverter (INV2) with a second DC main circuit electrically connected to a high voltage circuit side part of the chopper circuit (5), and a high frequency insulation transformer (15) electrically connected between an alternate current (AC) terminal portion of the first inverter (INV1) and an AC terminal portion of the second inverter (INV2).

## Description

### FIELD

Embodiments described herein relate generally to a power conversion device, and to a power supply device for a substation.

### BACKGROUND

A direct current (DC) feeder system, i.e., a power supply system for DC electric railways, is characterized by abrupt load changes and large feeder voltage variations. It is common with a DC feeder system to convert alternate current (AC) power into DC power using a diode rectifier. For example, power regeneration from the DC feeder system to an AC power system requires installation of a regeneration inverter, and unless a sufficient load is available around a regeneration vehicle so that a regenerative current can be absorbed from the regeneration vehicle, a state of regeneration invalidation with the regeneration vehicle will result.

In order to cope with such voltage variations and regeneration invalidation, installation of a DC feeder system provided with power storage means has been practiced. As one example, when a train of high output characteristics is introduced, a power supply device having power storage means may be installed so as to be prepared for reduced overhead line voltage, generation of surplus regenerative power, etc. The power supply device used in this context has a converter for converting a voltage of a storage battery into a given voltage for output.

### CITATION LIST

### PATENT LITERATURE

[Patent Document 1]
Jpn. Pat. Appln. KOKAI Publication No. 2018-98834

### SUMMARY

### TECHNICAL PROBLEM

For example, by insulating a feeder circuit and a battery circuit from each other, a storage battery can have a reduced ground withstand voltage, and accordingly, a desired amount of power can be charged and discharged between an overhead line and the storage battery. Meanwhile, an overhead line voltage in, for example, the DC 1500 V feeding configurations generally varies in the range of about 900 V to 1800 V, and as such, when the difference between a battery voltage and the overhead line voltage is large, the value of a peak current flowing through the insulation circuit (for example, a high frequency transformer) can become large. This raises the need for an up-sized high frequency insulation transformer and an increased current rating of power semiconductor elements used for the power conversion device, which will consequently increase the device size and costs.

Embodiments herein have been formulated in view of these circumstances, and the objects thereof include downsizing of the power conversion device and the power supply device.

### SOLUTION TO PROBLEM

A power conversion device according to an embodiment is electrically connected between a first direct current (DC) power supply and a second DC power supply. The power conversion device includes a chopper circuit with a step-down output terminal electrically connected, via a reactor, between a positive terminal and a negative terminal of the second DC power supply. The power conversion device also includes a high frequency insulation circuit including a first inverter with a first DC main circuit electrically connected between a positive terminal and a negative terminal of the first DC power supply, a second inverter with a second DC main circuit electrically connected to a high voltage circuit side part of the chopper circuit, and a high frequency insulation transformer electrically connected between an alternate current (AC) terminal portion of the first inverter and an AC terminal portion of the second inverter.

### BRIEF DESCRIPTION OF THE DRAWINGS

FIG. 1 is a diagram schematically showing an exemplary configuration of a power conversion device and a power supply device according to a first embodiment.
FIG. 2 is a diagram schematically showing an exemplary configuration of a power conversion unit of a power conversion device according to a second embodiment.
FIG. 3 is a diagram schematically showing an exemplary configuration of a power conversion device and a power supply device according to a third embodiment.

### DETAILED DESCRIPTION

A power conversion device, as well as a power supply device for a substation, according to each embodiment will be described in detail with reference to the drawings.

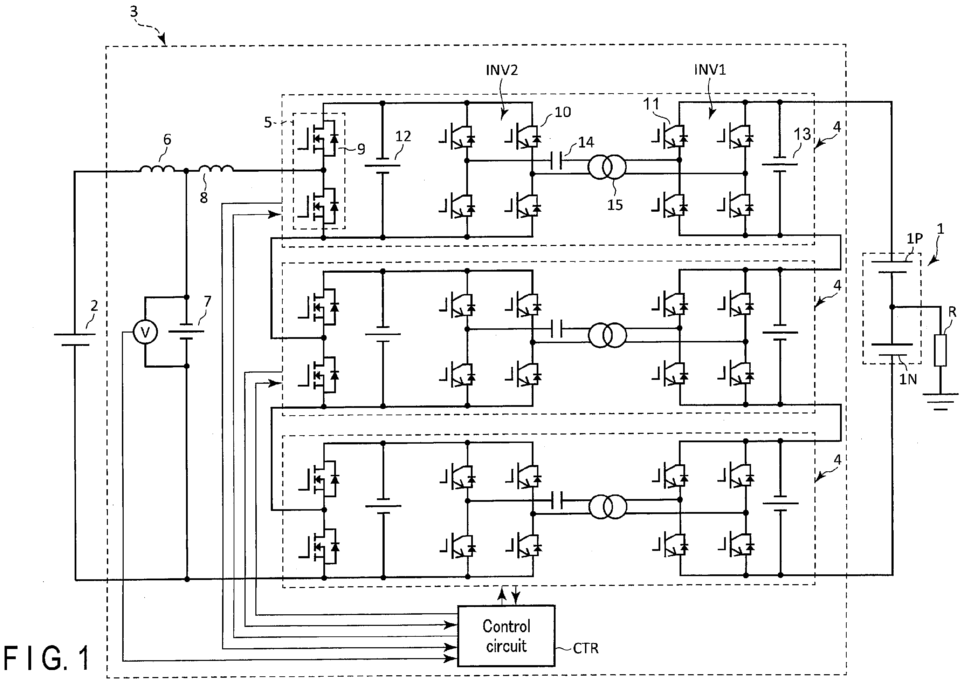

FIG. 1 is a diagram schematically showing an exemplary configuration of a power conversion device and a power supply device according to the first embodiment.

The power supply device according to this embodiment is a device intended for installation in, for example, a substation and includes a first DC power supply 1, a resistor R, and a power conversion device 3. Also, the power supply device is electrically connected to a second DC power supply 2. The second DC power supply 2 is a DC power supply with a DC feeder circuit, which is, for example, an overhead line. In one example, the second DC power supply 2 is a DC 1500 V feeder.

The power conversion device 3 includes multiple power conversion units 4, reactors 6 and 8, a capacitor 7, and a control circuit CTR.

The first DC power supply 1 is, for example, a DC power supply with a storage battery. The first DC power supply 1 may include a power converter adapted to convert AC power into DC power for output.

In this embodiment, the first DC power supply 1 is grounded, via the resister R, at a location (a "neutral point") between a high potential side power supply 1P and a low potential side power supply IN. This enables reduction in ground potential of the storage battery of the first DC power supply 1. Note that, if the storage battery of the first DC power supply 1 has a sufficient withstand voltage, the grounding at the neutral point may be replaced with the grounding on the low potential side of the first DC power supply 1, and the circuits located closer to the first DC power supply 1 than to the insulation circuit (a high frequency insulation transformer 15) may be placed in an electrically floating state.

In the example shown in FIG. 1, the power conversion device 3 includes three power conversion units 4. These power conversion units 4 each include a chopper circuit 5 and a resonant high frequency insulation circuit. The resonant high frequency insulation circuit includes capacitors 12 and 13, a first inverter INV1, a resonant capacitor 14, the high frequency insulation transformer 15, and a second inverter INV2.

The first inverter INV1 is a full bridge circuit having two legs electrically connected between first DC main circuits. Each leg of the first inverter INV1 includes an upper arm and a lower arm. The upper arm and the lower arm of the first inverter INV1 each include a power semiconductor element 10 such as an insulated gate bipolar transistor (IGBT). Use of the power semiconductor elements 10 such as IGBTs can suppress a conduction loss in the first inverter INV1.

The capacitor 13 is connected between the high potential side DC terminal and the low potential side DC terminal of the first inverter INV1.

The second inverter INV2 is a full bridge circuit having two legs electrically connected between second DC main circuits. Each leg of the second inverter INV2 includes an upper arm and a lower arm. The upper arm and the lower arm of the second inverter INV2 each include a power semiconductor element 11 such as an IGBT. Use of the power semiconductor elements 11 such as IGBTs can suppress a conduction loss in the second inverter INV2.

The capacitor 12 is connected between the high potential side DC terminal and the low potential side DC terminal of the second inverter INV2.

The high frequency insulation transformer 15 is connected between respective AC terminal portions of the first inverter INV1 and the second inverter INV2. The high frequency insulation transformer 15 is, for example, a high frequency transformation circuit and includes a first winding connected between the AC terminals of the two legs of the first inverter INV1 and a second winding connected between the AC terminals of the two legs of the second inverter INV2. In the high frequency insulation transformer 15, the winding number of the first winding and that of the second winding are set according to the voltage ratio between the capacitors 12 and 13 and the voltage of the DC power supply 1.

The resonant capacitor 14 is provided in the middle of the AC line that electrically connects the second winding of the high frequency insulation transformer 15 and the AC terminal of one of the legs of the second inverter INV2. The resonant capacitor 14 may be provided in the middle of the AC line between the first winding and the first inverter INV1.

The chopper circuit 5, at its part on the high voltage circuit side, is electrically connected to the second DC main circuits of the second inverter INV2. The chopper circuit 5 is a half bridge circuit having two switching elements 9 connected in series between the second DC main circuits. A switching element using a wide band gap semiconductor, i.e., a wide band gap semiconductor element such as a silicon-carbide metal-oxide-semiconductor field-effect transistor (SiC-MOSFET) may preferably be adopted as the switching elements 9 of the chopper circuit 5. Examples of the wide band gap semiconductor include III-V semiconductors. The chopper circuit 5 is subject to hard switching, and therefore, use of such wide band gap semiconductors can reduce switching losses in the chopper circuit 5.

The capacitors 13 of the three power conversion units 4 are connected in series between the positive terminal and the negative terminal of the first DC power supply 1. More specifically, the high potential side first DC main circuit of the highest potential side power conversion unit 4 is electrically connected to the positive terminal of the first DC power supply 1. The low potential side first DC main circuit of the highest potential side power conversion unit 4 is electrically connected to the high potential side first DC main circuit of the next stage power conversion unit 4 (the one connected on the low potential side). The high potential side first DC main circuit of the lowest potential side power conversion unit 4 is electrically connected to the low potential side first DC main circuit of the former stage power conversion unit 4 (the one connected on the high potential side). The low potential side first DC main circuit of the lowest potential side power conversion unit 4 is electrically connected to the negative terminal of the first DC power supply 1.

The chopper circuits 5 of the three power conversion units 4 are electrically connected to one another via step-down output terminals. More specifically, the low potential side second DC main circuit of the power conversion unit 4 is electrically connected to a point between the two switching elements 9 of the next stage power conversion unit 4 (the one connected on the low potential side). A point between the two switching elements 9 of the chopper circuit 5 of the highest potential side power conversion unit 4 is electrically connected to the positive terminal of the second DC power supply 2 via the reactor 8 and the reactor 6. The low potential side second DC main circuit of the lowest potential side power conversion unit 4 is electrically connected to the negative terminal of the second DC power supply 2. That is, as shown in FIG. 1, parts of the three power conversion units 4 on the side of the respective chopper circuits 5 are arranged in cascade connections.

The reactor 6 and the reactor 8 are connected in series between the positive terminal of the second DC power supply 2 and a point between the two switching elements 9 of the highest potential side power conversion unit 4.

The capacitor 7 and the reactor 6 are connected in series between the positive terminal and the negative terminal of the second DC power supply 2. The reactor 6 and the capacitor 7 constitute an LC filter for preventing a harmonic current from flowing into the second DC power supply 2.

The control circuit CTR is, for example, an arithmetic circuit including at least one processor such as a central processing unit (CPU) or a micro processing unit (MPU), and a memory adapted to store one or more processor-executable programs.

The control circuit CTR controls operations of each chopper circuit 5 to control the current flowing into the reactor 8. The control circuit CTR also controls the voltage of the capacitor 7 to be a predetermined value. Where necessary, the control circuit CTR may acquire values detected by sensors, including a voltage sensor for detecting the voltage of the capacitor 7 and various sensors provided in the power conversion device 3 (not illustrated), and use these values for calculation.

Next, an exemplary operation of the power supply device and the power conversion device according to the present embodiment will be described.

In one example, for supplying power from the first DC power supply 1 to the second DC power supply 2, the first inverter INV1 stops switching operations. In other words, the four power semiconductor elements 11 in the first inverter INV1 are placed in an off state. The second inverter INV2 serves as a high frequency inverter and outputs a high frequency current.

The voltages of the capacitor 12 and the capacitor 13 are determined by the ratio in winding number between the first winding and the second winding of the high frequency insulation transformer 15. Here, the sum of voltages of as many capacitors 12 as the number of series stages (i.e., three) is set to be larger than the voltage of the second DC power supply 2.

Under these conditions, the control circuit CTR controls the chopper circuits 5 to perform a step-down operation, and causes the power conversion device 3 to output a current to the second DC power supply 2. Here, the control circuit CTR causes the chopper circuits 5 to perform an interleave operation. As an example, since the three chopper circuits 5 are connected in series in the power conversion device 3 shown in FIG. 1, the control circuit CTR generates gate signals with their respective phases shifted by 120° from each other, for the switching elements 9 of the three chopper circuits 5. Accordingly, when, for example, a switching frequency for one power conversion unit 4 is 1 kHz, the switching frequency for the entire power conversion device 3 equals 3 kHz. This enables the current output from the power conversion device 3 to have an increased frequency, and consequently, the inductance value of the reactor 8 can be suppressed to allow for the downsizing of the reactor 8.

Further, since this embodiment assumes the power conversion unit 4 to be a resonant high frequency insulation circuit, there is no increase in the value of a peak current flowing through the high frequency insulation transformer 15 as compared to, for example, cases of a conventional dual active bridge (DAB) circuit. Thus, it is possible to prevent the current rating of the high frequency insulation transformer 15 from increasing, and to suppress the peak currents of the power semiconductor elements 10 and 11 of the first and second inverters INV1 and INV2, so that the power supply device and the power conversion device can be downsized.

Note that, for supplying power from the second DC power supply 2 to the first DC power supply 1, operations proceed in a manner contrary to the above, such that the second inverter INV2 stops switching operations and the first inverter INV1 serves as a high frequency inverter to output a high frequency current. Under these conditions, the control circuit CTR generates gate signals for the switching elements 9 of the chopper circuits 5 so that a desired current flows through the reactor 8.

According to the present embodiment as described above, the downsizing of the power conversion device and the power supply device can be realized.

Next, a power conversion device and a power supply device according to a second embodiment will be described in detail with reference to the drawings. The description will use the same reference symbols for configurations or components which are similar to those of the power conversion device and the power supply device according to the first embodiment, and redundant explanations will be omitted.

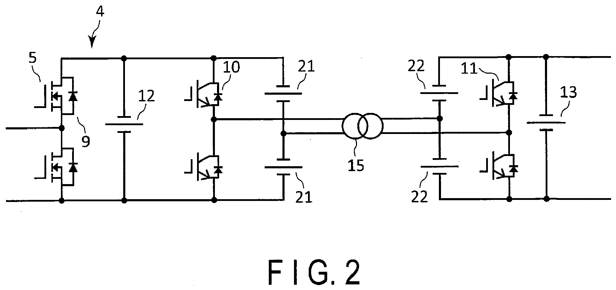

FIG. 2 is a diagram schematically showing an exemplary configuration of a power conversion unit of the power conversion device according to the second embodiment.

The power conversion device according to this embodiment differs from the first embodiment in configurations of the first inverters INV1 and the second inverters INV2 of the power conversion units 4.

The first inverter INV1 is constituted by a leg (a first leg) having an upper arm and a lower arm each provided with the power semiconductor element 10, and a leg (a second leg) having an upper arm and a lower arm each provided with a resonant capacitor 21.

The second inverter INV2 is constituted by a leg (a first leg) having an upper arm and a lower arm each provided with the power semiconductor element 11, and a leg (a second leg) having an upper arm and a lower arm each provided with a resonant capacitor 22.

In the power conversion device according to this embodiment, the first and second inverters INV1 and INV2 include the resonant capacitors 21 and 22, and as such, the resonant capacitor 14 as in the power conversion unit 4 of the above described first embodiment is omitted.

Other than these configurations, the power conversion unit 4 of the power conversion device according to this embodiment conforms to the first embodiment. Also, the operations of the power conversion device and the power supply device according to this embodiment proceed in a manner similar to those of the first embodiment.

That is, with the power conversion device and the power supply device according to this embodiment, it is possible to prevent the current rating of the high frequency insulation transformer 15 from increasing, and to suppress the peak currents of the power semiconductor elements 10 and 11 of the first and second inverters INV1 and INV2. According to the embodiment, therefore, the downsizing of the power conversion device and the power supply device can be realized.

Next, a power conversion device and a power supply device according to a third embodiment will be described in detail with reference to the drawings.

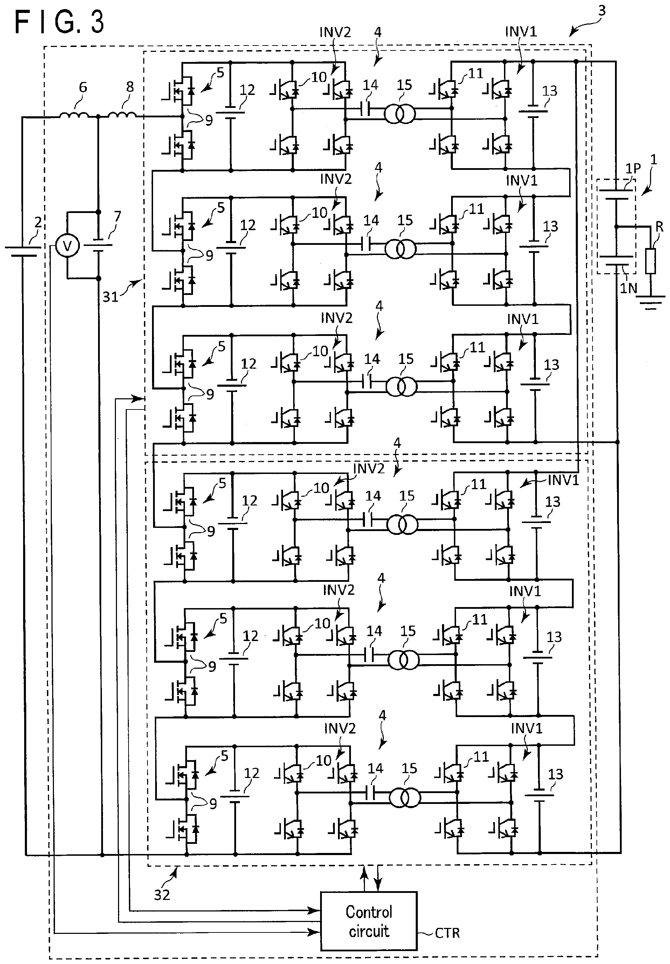

FIG. 3 is a diagram schematically showing an exemplary configuration of the power conversion device and the power supply device according to the third embodiment.

The power supply device according to this embodiment includes the first DC power supply 1, the resistor R, and the power conversion device 3, and is electrically connected to the second DC power supply 2. The second DC power supply 2 is a DC power supply with a DC feeder circuit, which is, for example, an overhead line. In one example, the second DC power supply 2 is a DC 3000 V feeder.

The power conversion device 3 according to the present embodiment includes a multiple of the power conversion units 4 each including the chopper circuit 5 and the resonant high frequency insulation circuit. At least some of the first DC main circuits of the multiple first inverters INV1 are connected in parallel to the first DC power supply 1. The step-down output terminals of the multiple chopper circuits 5 are connected in series between the positive terminal and the negative terminal of the second DC power supply 2.

In the example shown in FIG. 3, the power conversion device 3 includes a first conversion section 31, a second conversion section 32, the capacitor 7, and the reactors 6 and 8.

The first DC power supply 1 is, for example, a DC power supply with a storage battery. The first DC power supply 1 may be a power converter adapted to convert AC power into DC power for output.

In this embodiment, the first DC power supply 1 is grounded, via the resister R, at a location (a "neutral point") between the high potential side power supply 1P and the low potential side power supply IN. This enables reduction in ground potential of the storage battery of the first DC power supply 1. Note that, if the storage battery of the first DC power supply 1 has a sufficient withstand voltage, the grounding at the neutral point may be replaced with the grounding on the low potential side of the first DC power supply 1, and the circuits located closer to the first DC power supply 1 may be isolated and placed in an electrically floating state.

The first conversion section 31 and the second conversion section 32 each include three power conversion units 4. The first conversion section 31 and the second conversion section 32 are connected in parallel to the first DC power supply 1, and are connected in series between the positive terminal and the negative terminal of the second DC power supply 2.

In each of the first conversion section 31 and the second conversion section 32, the capacitors 13 of the three power conversion units 4 are connected in series between the positive terminal and the negative terminal of the first DC power supply 1. More specifically, the high potential side first DC main circuit of the highest potential side power conversion unit 4 is electrically connected to the positive terminal of the first DC power supply 1. The low potential side first DC main circuit of the highest potential side power conversion unit 4 is electrically connected to the high potential side first DC main circuit of the next stage power conversion unit 4 (the one connected on the low potential side). The high potential side first DC main circuit of the lowest potential side power conversion unit 4 is electrically connected to the low potential side first DC main circuit of the former stage power conversion unit 4 (the one connected on the high potential side). The low potential side first DC main circuit of the lowest potential side power conversion unit 4 is electrically connected to the negative terminal of the first DC power supply 1.

The step-down output terminals of the chopper circuits 5 of the three power conversion units 4 of the first conversion section 31 and the step-down output terminals of the chopper circuits 5 of the three power conversion units 4 of the second conversion section 32 are connected in series between the positive terminal and the negative terminal of the second DC power supply 2. More specifically, the low potential side second DC main circuit of the power conversion unit 4 is electrically connected to a point between the two switching elements 9 of the next stage power conversion unit 4 (the one connected on the low potential side). A point between the two switching elements 9 of the chopper circuit 5 of the highest potential side power conversion unit 4 is electrically connected to the positive terminal of the second DC power supply 2 via the reactor 8 and the reactor 6. The low potential side second DC main circuit of the lowest potential side power conversion unit 4 is electrically connected to the negative terminal of the second DC power supply 2.

The reactor 6 and the reactor 8 are connected in series between the positive terminal of the second DC power supply 2 and a point between the two switching elements 9 of the highest potential side power conversion unit 4.

The capacitor 7 and the reactor 6 are connected in series between the positive terminal and the negative terminal of the second DC power supply 2. The reactor 6 and the capacitor 7 constitute an LC filter for preventing a harmonic current from flowing into the second DC power supply 2.

The control circuit CTR is, for example, an arithmetic circuit including at least one processor such as a central processing unit (CPU) or a micro processing unit (MPU), and a memory adapted to store one or more processor-executable programs.

The control circuit CTR controls operations of each chopper circuit 5 to control the current flowing into the reactor 8. The control circuit CTR also controls the voltage of the capacitor 7 to be a predetermined value.

The operations of the power conversion device and the power supply device according to this embodiment proceed in a manner similar to those of the first embodiment. That is, with the power conversion device and the power supply device according to this embodiment, it is possible to prevent the current rating of the high frequency insulation transformer 15 from increasing, and to suppress the peak currents of the power semiconductor elements 10 and 11 of the first and second inverters INV1 and INV2. According to the embodiment, therefore, the downsizing of the power conversion device and the power supply device can be realized.

While certain embodiments have been described, they have been presented by way of example only, and they are not intended to limit the scope of the inventions. Indeed, the novel embodiments described herein may be worked in a variety of other forms. Furthermore, various omissions, substitutions, and changes in the form of the embodiments may be made without departing from the spirit of the inventions. The embodiments and their modifications are covered by the accompanying claims and their equivalents, as would fall within the scope and gist of the inventions.

For example, in more than one embodiment described above, where the multiple capacitors 13 are connected in series between the positive terminal and the negative terminal of the first DC power supply 1, the multiple capacitors 13 may instead be connected in parallel to the first DC power supply 1. Even with such a configuration, the same effects as those of the foregoing embodiments can be attained.

Moreover, in more than one embodiment described above, where the power conversion device 3 includes multiple power conversion units 4, the power conversion device 3 may instead include at least one power conversion unit 4. The number of the power conversion units 4 to be provided for the power conversion device 3 may be adjusted according to the switching frequencies and the switching loss of the switching elements 9 of the chopper circuits 5.

## Claims

1. A power conversion device electrically connected between a first direct current (DC) power supply and a second DC power supply and comprising:
a chopper circuit with a step-down output terminal electrically connected, via a reactor, between a positive terminal and a negative terminal of the second DC power supply; and
a high frequency insulation circuit including
a first inverter with a first DC main circuit electrically connected between a positive terminal and a negative terminal of the first DC power supply,
a second inverter with a second DC main circuit electrically connected to a high voltage circuit side part of the chopper circuit, and
a high frequency insulation transformer electrically connected between an alternate current (AC) terminal portion of the first inverter and an AC terminal portion of the second inverter.

2. The power conversion device according to claim 1, wherein
each of the first inverter and the second inverter is a full bridge circuit,
the high frequency insulation transformer is a transformer circuit including a first winding electrically connected between AC terminals of the first inverter and a second winding electrically connected between AC terminals of the second inverter, and
the power conversion device further comprises a resonant capacitor provided on an AC line connected between one of the AC terminals of the second inverter and the second winding, or an AC line connected between one of the AC terminals of the first inverter and the first winding.

3. The power conversion device according to claim 1, wherein each of the first inverter and the second inverter includes a first leg including an upper arm and a lower arm each provided with a switching element, and a second leg connected in parallel with the first leg and including an upper arm and a lower arm each provided with a resonant capacitor.

4. The power conversion device according to any one of claims 1 to 3, wherein the chopper circuit is a half bridge circuit.

5. The power conversion device according to claim 4, wherein the chopper circuit includes an upper arm and a lower arm each provided with a wide band gap semiconductor element.

6. The power conversion device according to any one of claims 1 to 5, wherein
the power conversion device comprises a plurality of power conversion units each including the chopper circuit and the high frequency insulation circuit,
the first DC main circuits of a plurality of the first inverters are connected in series between the positive terminal and the negative terminal of the first DC power supply, and
a plurality of the chopper circuits are arranged in cascade connections to one another and are connected between the positive terminal and the negative terminal of the second DC power supply.

7. The power conversion device according to any one of claims 1 to 5, wherein
the power conversion device comprises a plurality of power conversion units each including the chopper circuit and the high frequency insulation circuit,
at least some of the first DC main circuits of a plurality of the first inverters are connected in parallel to the first DC power supply, and
a plurality of the chopper circuits are arranged in cascade connections to one another and are connected between the positive terminal and the negative terminal of the second DC power supply.

8. The power conversion device according to claim 6 or 7, further comprising a control circuit configured to control an operation of the power conversion units,
wherein the control circuit is configured to cause the chopper circuits to perform an interleave operation among the power conversion units.

9. A power supply device for a substation, comprising:
the power conversion device according to any one of claims 1 to 8; and
the first DC power supply,
wherein the first DC power supply includes a storage battery.
